# EUROPÄISCHE PATENTSCHRIFT

(11) **EP 2 026 506 B1**
(45) Veröffentlichungstag und Bekanntmachung des Hinweises auf die Patenterteilung: **04.07.2012**
(21) Anmeldenummer: 08105022.1
(22) Anmeldetag: 12.08.2008
(51) Int. Cl.: H04L 12/28, H04L 12/56

(54) **ROUTINGSYSTEM FÜR INTEGRIERTE GEBÄUDEDIENSTE**
ROUTINGSYSTEM FOR INTEGRATED BUILDING SERVICES
SYSTÈME DE ROUTAGE POUR SERVICES D'IMMEUBLES INTÉGRÉS

(30) Priorität: 16.08.2007 DE 102007038592
(43) Veröffentlichungstag der Anmeldung: 18.02.2009
(73) Patentinhaber: Raumcomputer Entwicklungs- und Vertriebs GmbH, 76137 Karlsruhe (DE)
(72) Erfinder: Hovestadt, Ludger, Prof. Dr., 8049 Zürich (CH)
(74) Vertreter: Haverkamp, Jens

(56) Entgegenhaltungen:
- EP-B1- 1 342 220
- WO-A-99/29090
- WO-A-2007/083249
- US-A1- 2007 157 314
- HARENDRA A ALWIS ET AL: "A performance evaluation of Route Based Packet Marking (RBPM) for IP trace back" MULTITOPIC CONFERENCE, 2006. INMIC '06. IEEE, IEEE, PI, 1. Dezember 2006 (2006-12-01), Seiten 364-369, XP031085748 ISBN: 978-1-4244-0794-1
- LAW T K T ET AL: "You Can Run, But You Can't Hide: An Effective Statistical Methodology to Trace Back DDoS Attackers" IEEE TRANSACTIONS ON PARALLEL AND DISTRIBUTED SYSTEMS, IEEE SERVICE CENTER, LOS ALAMITOS, CA, US, Bd. 16, Nr. 9, 1. September 2005 (2005-09-01), Seiten 799-813, XP011137113 ISSN: 1045-9219

## Beschreibung

Die Erfindung betrifft ein System für integrierte Gebäudedienste nach dem Oberbegriff des Anspruchs 1 sowie ein Verfahren zum Betreiben eines solchen integrierten Gebäudedienstesystems.

In der Gebäudeautomatisierungstechnik ist es bekannt, fest installierte Gebäudeeinrichtungen, beispielsweise Aktoren für Leuchtkörper, Rolläden, Heizkörper oder dergleichen und Sensoren in Form von Schaltern, Temperaturfühlern, Lichtschranke und dergleichen über Kabel mit einem Switch oder mehrere Switches netzwerkartig über Funk oder Kabel mit einer zentralen Steuerung zu einem System für integrierte Gebäudedienste zu verbinden. Ein solches System ist aus EP 1 342 220 B1 bekannt. Ist die Funktion eines derartigen Systems jedoch in einem Abschnitt des Gebäudes beeinträchtigt, beispielsweise durch Bauteilausfall oder Brand, werden Signale nicht oder nur verfälscht weitergeleitet. Dieses kann zu einer Fehleinschätzung des Gebäudezustandes und insbesondere zu nicht erkannten Gefahrzuständen oder zu Fehlalarmen führen. Zudem kann die Aktivierung von Sicherheitseinrichtungen wie Löschanlagen oder Fluchtwegentriegelungen verhindert werden.

Ein weiteres System für integrierte Gebäudedienste ist auch aus US 2002/0068544 A1 bekannt. Ferner sind aus US 2007/0157314 A1, WO 99/29090 und WO 2007/083249 A1 Verfahren zur Rückverfolgung von Nachrichten in Netzwerken mit Hilfe von an eine Nachricht angehängten Markierungsinformationen bzw. einer Liste von Switches bekannt. Hierdurch kann der Weg zu einem Angreifer rekonstruiert bzw. ein ineffizientes Routing erkannt werden.

Der Erfindung liegt ausgehend von EP 1 342 220 B1 die Aufgabe zugrunde, ein System für integrierte Gebäudedienste nach dem Oberbegriff des Anspruchs 1 zu schaffen, das störunanfälliger ist.

Diese Aufgabe wird gelöst durch ein System mit den Merkmalen des Anspruchs 1 sowie durch ein Verfahren mit den Merkmalen des Anspruchs 6.

Hierdurch ist ein System für integrierte Gebäudedienste geschaffen, bei dem zur Feststellung und Festlegen des physikalischen Weges des Datenpaketes durch Switches die Datenpakete mit Kennungen mehrerer Switches markierbar sind.

Dadurch ist der physikalische Weg eines Datenpakets durch die Switches des Netzwerks sowohl feststell- als auch festlegbar. Im ersten Fall markieren die Switches weitergeleitete Datenpakete mit ihrer Kennung und die Steuerung rekonstruiert den physikalischen Weg eines Datenpakets anhand der Markierung und der Zuordnungstabelle. Im zweiten Fall markiert die Steuerung ein zu sendendes Datenpaket mit Kennungen, die den physikalischen Weg des Datenpakets durch die Switches zum Ziel festlegen, und die Switches leiten die Datenpakete der Markierung entsprechend weiter.

Ist der Weg, den ein Datenpaket durch das Gebäude zurückgelegt hat, bekannt, kann die Steuerung die Zuverlässigkeit der im Datenpaket enthaltenen Daten einschätzen und das Datenpaket auswerten oder verwerfen oder ein wiederholtes Senden des Datenpakets anfordern. Hierdurch kann vermieden werden, dass durch Gebäudeabschnitte, die potentiell gestört sind, durchgeleitete Datenpakete verfälscht werden und eine Fehlfunktion anderer Gebäudeabschnitte verursachen. Ein vollständiges Abschalten der betroffenen Gebäudeabschnitte ist dabei nicht erforderlich. Andererseits kann, wenn z.B. eine Fehlfunktion bekannt ist, ein Datenpaket um den betroffenen Gebäudeabschnitt oder Switch herumgeleitet werden.

Ist jeder Zwischenstation eine eindeutige Kennung zugewiesen, kann der Weg eines Datenpakets durch das Gebäude exakt festgestellt oder - gelegt werden. Hierzu markiert jeder Switch das von ihm weitergeleitete Datenpaket, indem er seine Kennung anhängt.

In vielen Fällen ist diese Genauigkeit jedoch nicht erforderlich, sodass das Gebäude in mehrere Zonen unterteilt werden kann und den Switches einer Zone gleiche Kennungen zugewiesen werden können. Dadurch werden der Installations- und Verwaltungsaufwand für die Zuordnungstabelle gering gehalten. Zudem hängt ein Switch seine Kennung vorzugsweise lediglich dann an das Datenpaket an, wenn sie sich von der letzen angehängten Kennung unterscheidet. Dadurch wird auch der durch die Markierungen erzeugte Datenoverhead gering gehalten.

Die Zonen können räumlich getrennte Gebäudeabschnitte, z.B. einzelne Zimmer oder ganze Geschosse, oder funktionale Gebäudeabschnitte, z.B. für höheren Datendurchsatz ausgelegte oder besonders gegen Brand oder Manipulation gesicherte Hauptverbindungswege, sein.

Ein Datenpaket kann einen Platzhalter für eine Kennung aufweisen, die mit einer Kennung höherer Priorität überschreibbar ist. Ist z.B. jedem Switch abhängig von seinem Installationsort eine Sicherheitsstufe zugewiesen und trägt ein Switch seine Kennung nur dann in den Platzhalter ein, wenn seine Sicherheitsstufe geringer ist, als die bereits im Platzhalter vermerkte, ist die Zuverlässigkeit der Daten des Datenpakets direkt dem Platzhalter entnehmbar.

Weitere Ausgestaltungen der Erfindung sind der nachfolgenden Beschreibung und den Unteransprüchen zu entnehmen.

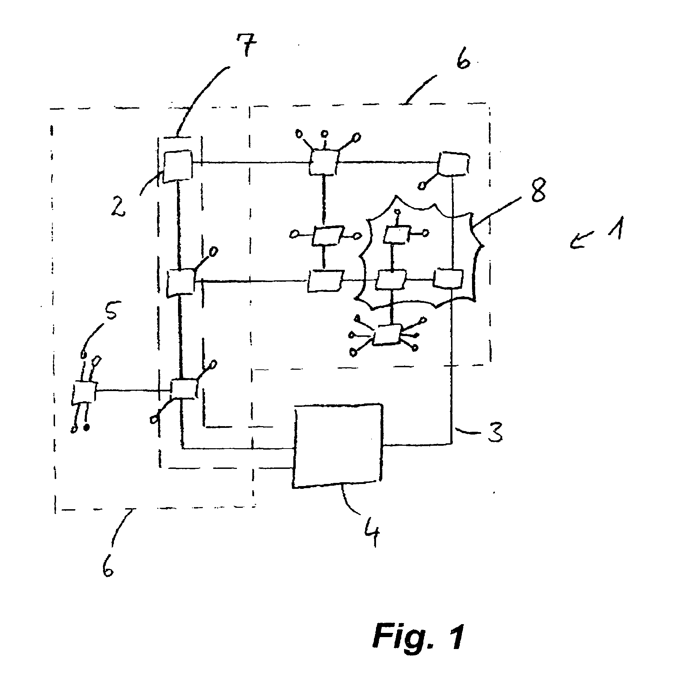

Die Erfindung wird nachstehend anhand eines in der beigefügten Figur, die ein System für integrierte Gebäudedienste zeigt, dargestellten Ausführungsbeispiels näher erläutert.

Das in der Fig. gezeigte System 1 für integrierte Gebäudedienste umfasst mehrere Switches 2, die hier über ein an sich bekanntes Netzwerk 3 mit TCP/IP Protokoll zum Austausch von Datenpaketen untereinander und mit einer Steuerung 4 verbunden sind und von denen einige zum Steuern oder Überwachen von angeschlossenen Gebäudeeinrichtungen 5 vorgesehen sind.

Jeder Switch 2 enthält hier eine eindeutige Kennung beispielsweise in Form einer Seriennummer. Der Kennung ist in einer in der Steuerung 4, z.B. einem Computer, gespeicherten Zuordnungstabelle eine Information über den Ort des jeweiligen Switches 2 im Gebäude zugeordnet. Die Information kann eine Gebäudekoordinate sein oder einen Gebäudeabschnitt 6, z.B. ein Zimmer oder Stockwerk, bezeichnen, wobei allen im selben Gebäudeabschnitt 6 installierten Switches 2 dieselbe Information zugeordnet sein kann. Die Information kann auch eine funktionale Positionsinformation sein, z.B. betreffend die Anordnung des Switches 2 in einem gegen Brand oder Manipulation besonders gesicherten Bereich 7 oder einem für hohen Datendurchsatz ausgelegten Hauptverbindungsweg. Es können auch mehrere Informationen pro Switch gespeichert sein, insbesondere sowohl räumliche als auch funktionale Positionsinformationen.

Im dargestellten Beispiel enthalten die Switches 2 neben ihrer eindeutigen Kennung auch mehrere Zonenkennungen, die in ihrer Anordnung einem von verschiedenen räumlichen bzw. funktionalen Gebäudeabschnitten entsprechen. Die Switches 2 enthalten hier also auch eine den jeweiligen Gebäudeabschnitt 6 eindeutig bezeichnende Kennung sowie eine binäre Kennung, die anzeigt, ob der Switch im gesicherten Bereich 7 angeordnet ist oder nicht.

Sendet ein Switch 2 ein Datenpaket zur Steuerung 4, beispielsweise um der Steuerung 4 eine Betätigung einer als Schalter ausgeführten Gebäudeeinrichtung 5 mitzuteilen, wird das Datenpaket entlang seines Weges durch das Netzwerk 3 von jedem Switch 2, den es passiert, mit den Kennungen des Switches 2 markiert.

Hierzu hängt jeder Switch 2 seine eindeutige Kennung an eine Liste im Datenpaket an. Zudem hängt jeder Switch 2 seine den Gebäudeabschnitt 6 eindeutig bezeichnende Kennung vorzugsweise an eine weitere Liste im Datenpaket an, sofern sie sich von der vorhergehenden Kennung unterscheidet. Schließlich markieren diejenigen Switches 2, die nicht im gesicherten Bereich 7 angeordnet sind, einen auf "sicher" vorbesetzten Platzhalter im Datenpaket mit der Kennung "unsicher".

Anhand der Kennungen in den Listen kann die Steuerung 4 nunmehr den Weg des empfangenen Datenpakets durch die einzelnen Switches 2 bzw. die Gebäudeabschnitte 6 rekonstruieren und anhand der im Platzhalter enthaltenen Kennung feststellen, ob das Datenpaket auf seinem Weg ausschließlich im gesicherten Bereich 7 weitergeleitet worden ist oder diesen verlassen hat.

Sendet umgekehrt die Steuerung 4 ein Datenpaket an einen Switch 2, beispielsweise um eine als Fluchttürentriegelung ausgebildete Gebäudeeinrichtung 2 zu aktivieren, stellt sie zunächst anhand der Zuordnungstabelle einen geeigneten Weg für das Datenpaket zusammen, wobei insbesondere ein Bereich 8 mit einem Störfall umgangen wird. Hierzu werden Kennungen der Switches 2 oder Gebäudeabschnitte 6 des gewünschten Wegs sequentiell und gegebenenfalls mit Alternativen in eine Liste im Datenpaket eingetragen oder gegebenenfalls der Platzhalter auf "sicher" gesetzt. Die Switches 2 leiten das Datenpaket dann entsprechend den Listeneinträgen im Netzwerk 3 weiter. Die Kennungen können hierbei, gegebenenfalls zusätzlich zu den eindeutigen oder Zonenkennungen, eine Information enthalten, an welchem Anschluss eines Switches der jeweils nächste Switch angeschlossen ist. Die Switches 2 können auch zum Erfragen der Kennung benachbarter Switches 2 ausgestaltet sein, oder Switches 2, deren Kennung nicht derjenigen in der Liste entspricht, können das Datenpaket an den sendenden Switch 2 zurückgeben, der es dann an einen anderen Switch 2 sendet, oder die Switches 2 können jeweils eine Tabelle mit den Kennungen der benachbarten Switches 2 enthalten usw.

## Patentansprüche

1. Integriertes Gebäudedienstesystem mit mehreren netzwerkartig untereinander und mit einer Steuerung (4) verbundenen Switches (2), die jeweils eine Kennung enthalten und von denen wenigstens einer zum Steuern oder Überwachen einer ihm zugeordneten Gebäudeeinrichtung (5) und hierzu zum Austauschen von Datenpaketen mit der Steuerung (4) ausgelegt ist, wobei die Datenpakete mit den Kennungen mehrerer Switches (2) markierbar sind und die Steuerung (4) eine Zuordnungstabelle enthält, in welcher jeder Kennung eine Information über die Position des entsprechenden Switches (2) im Gebäude zugeordnet ist, **dadurch gekennzeichnet, dass** die Switches (2) zum Markieren eines Datenpakets ausgestaltet sind, wobei mehrere Switches (2) eine gleiche Kennung enthalten, und die Datenpakete derart ausgelegt sind, dass diese entlang ihrer Wege durch das Netzwerk von jedem Switch (2), den sie passieren, mit der Kennung des Switches (2) derart markiert werden, dass jeder Switch (2) seine Kennung an eine Liste in den Datenpaketen anhängt, und die Steuerung (4) zum Auswerten der Markierung ausgestaltet ist.

2. System nach Anspruch 1, **dadurch gekennzeichnet, dass** die Steuerung (4) zum Markieren eines Datenpakets und die Switches (2) zum Auswerten der Markierung und zum Weiterleiten des Datenpakets entsprechend der Markierung ausgestaltet sind.

3. System nach Anspruch 1 oder 2, **dadurch gekennzeichnet, dass** das Datenpaket einen Platzhalter für eine Kennung aufweist.

4. System nach einem der Ansprüche 1 bis 3, **dadurch gekennzeichnet, dass** die Information eine Gebäudekoordinate oder einen Gebäudeabschnitt betrifft.

5. System nach einem der Ansprüche 1 bis 4, **dadurch gekennzeichnet, dass** die Gebäudeeinrichtung (5) ein Feuermelder, eine Fluchttürentriegelung oder eine andere Gebäudesicherheitseinrichtung ist.

6. Verfahren zum Betreiben eines integrierten Gebäudedienstesystems mit mehreren netzwerkartig untereinander und mit einer Steuerung (4) verbundenen Switches (2), die jeweils eine Kennung enthalten und von denen wenigstens einer zum Steuern oder Überwachen einer ihm zugeordneten Gebäudeeinrichtung (5) Datenpakete mit der Steuerung (4) austauschen kann, wobei die Datenpakete mit den Kennungen mehrerer Switches (2) markierbar sind und die Steuerung (4) eine Zuordnungstabelle enthält, in welcher jeder Kennung eine Information über die Position des entsprechenden Switches (2) im Gebäude zugeordnet ist, **dadurch gekennzeichnet, dass** mehrere Switches (2) eine gleiche Kennung enthalten und dass die Datenpakete entlang ihrer Wege durch das Netzwerk von jedem Switch (2), den sie passieren, mit der Kennung des Switches (2) derart markiert werden, dass jeder Switch (2) seine Kennung an eine Liste in den Datenpaketen anhängt.

7. Verfahren nach Anspruch 6, **dadurch gekennzeichnet, dass** sich die Größe eines Datenpaketes durch Hinzufügen einer Kennung vergrößert.

## Claims

1. Integrated building services system comprising a plurality of switches (2) which are interconnected in the manner of a network and are connected to a controller (4) and each contain an identifier, and of which at least one switch is designed to control or monitor a building device (5) assigned thereto and to this end is designed to exchange data packets with the controller (4), wherein the data packets can be labelled with the identifiers of a plurality of switches (2) and the controller (4) contains an assignment table in which each identifier is assigned information regarding the position of the corresponding switch (2) in the building, **characterised in that** the switches (2) are configured for labelling a data packet, wherein a plurality of switches (2) contain an identical identifier, and the data packets are configured in such a way that, on their way through the network, they are labelled with the identifier of the switch (2) by each switch (2) that they pass so that each switch (2) adds its identifier to a list in the data packets, and the controller (4) is designed to analyse the labelling.

2. System according to claim 1, **characterised in that** the controller (4) is designed to label a data packet and the switches (2) are designed to analyse the labelling and to forward the data packet according to the labelling.

3. System according to claim 1 or 2, **characterised in that** the data packet has a placeholder for an identifier.

4. System according to any one of claims 1 to 3, **characterised in that** the information relates to a building coordinate or to a building section.

5. System according to any one of claims 1 to 4, **characterised in that** the building device (5) is a fire alarm, an escape door unlocking means or another building safety device.

6. Method for operating an integrated building services system comprising a plurality of switches (2) which are interconnected in the manner of a network and are connected to a controller (4) and each contain an identifier, and of which at least one switch can exchange data packets with the controller (4) in order to control or monitor a building device (5) assigned thereto, wherein the data packets can be labelled with the identifiers of a plurality of switches (2) and the controller (4) contains an assignment table in which each identifier is assigned information regarding the position of the corresponding switch (2) in the building, **characterised in that** a plurality of switches (2) contain an identical identifier, and **in that** the data packets, on their way through the network, are labelled with the identifier of the switch (2) by each switch (2) that they pass so that each switch (2) adds its identifier to a list in the data packets.

7. Method according to claim 6, **characterised in that** the size of a data packet is increased by adding an identifier.

## Revendications

1. Système de routage pour service d'immeubles intégrés comportant plusieurs commutateurs réseau (2) reliés en réseau les uns aux autres et comportant une commande (4), contenant chacun une clé d'identification et dont au moins un est conçu pour piloter ou surveiller un équipement d'immeuble (5) qui lui est affecté et conçu à cet effet pour échanger des paquets avec la commande (4), les paquets pouvant être marqués par les clés d'identification de plusieurs commutateurs réseau (2) et la commande (4) comprenant une table d'allocation dans laquelle chaque clé d'identification est affectée à une information sur la position du commutateur réseau (2) correspondant dans l'immeuble, **caractérisé en ce que** les commutateurs réseau (2) sont conformés pour marquer un paquet, plusieurs commutateurs réseau (2) recevant la même clé d'identification, et les paquets étant conçus pour être marqués, tout au long de leur cheminement à travers le réseau, par chaque commutateur réseau (2) par lequel ils passent, par la clé d'identification du commutateur réseau (2), de telle sorte que chaque commutateur réseau (2) ajoute sa clé d'identification à une liste dans les paquets et que la commande (4) est conformée pour exploiter ce marquage.

2. Système selon la revendication 1, **caractérisé en ce que** la commande (4) pour marquer un paquet et les commutateurs réseau (2) pour exploiter le marquage et pour faire suivre le paquet sont conformés selon le marquage.

3. Système selon la revendication 1 ou 2, **caractérisé en ce que** le paquet présente un métacaractère pour une clé d'identification.

4. Système selon l'une des revendications 1 à 3, **caractérisé en ce que** l'information concerne une coordonnée d'immeuble ou un tronçon d'immeuble.

5. Système selon l'une des revendications 1 à 4, **caractérisé en ce que** l'équipement d'immeuble (5) est une alarme incendie, un déverrouillage d'une porte de sécurité ou un autre équipement de sécurité d'immeuble.

6. Procédé d'exploitation d'un système de routage pour service d'immeubles intégrés comportant plusieurs commutateurs réseau (2) reliés en réseau les uns aux autres et comportant une commande (4), contenant chacun une clé d'identification et dont au moins un est conçu pour piloter ou surveiller un équipement d'immeuble (5) qui lui est affecté et conçu à cet effet pour échanger des paquets avec la commande (4), les paquets pouvant être marqués par les clés d'identification de plusieurs commutateurs réseau (2) et la commande (4) comprenant une table d'allocation dans laquelle chaque clé d'identification est affectée à une information sur la position du commutateur réseau (2) correspondant dans l'immeuble, **caractérisé en ce que** plusieurs commutateurs réseau (2) reçoivent la même clé d'identification et que les paquets sont conçus pour être marqués, tout au long de leur cheminement à travers le réseau, par chaque commutateur réseau (2) par lequel ils passent, par la clé d'identification du commutateur réseau (2), de telle sorte que chaque commutateur réseau (2) ajoute sa clé d'identification à une liste dans les paquets.

7. Procédé selon la revendication 6, **caractérisé en ce que** la taille d'un paquet s'agrandit en raison de l'ajout d'une clé d'identification.
